# EUROPEAN PATENT APPLICATION

(11) **EP 3 800 153 A2**
(43) Date of publication of application: **07.04.2021**
(21) Application number: 20199434.0
(22) Date of filing: 30.09.2020
(51) Int. Cl.: B66B 5/00

(54) **ELECTROMAGNETIC BRAKE TEMPERATURE MONITORING SYSTEM AND METHOD**

(30) Priority: 04.10.2019 US 201916592825
(71) Applicant: Otis Elevator Company, Farmington, Connecticut 06032 (US)
(72) Inventor: CARDONA, Camilo, Farmington, CT Connecticut 06032 (US); MILLETT, Steven Michael, Farmington, CT Connecticut 06032 (US); YOON, KilMoon, 642-714 Changwon (KR); MU, Tao, Tianjin, Tianjin 300457 (CN); SHIN, Jeongki, 642-465 Changwon (KR); WATSON, Benjamin J., Farmington, CT Connecticut 06032 (US)
(74) Representative: Dehns

(57) **Abstract**

This disclosure relates to an electromagnetic brake temperature monitoring system and method, and in particular relates to passenger conveyer systems, such as elevator systems, employing the system and method. An example passenger conveyer system includes an electromagnetic brake (22) and a controller (28) configured to determine a temperature of the electromagnetic brake (22).

## Description

### TECHNICAL FIELD

This disclosure relates to an electromagnetic brake temperature monitoring system and method, and in particular relates to passenger conveyer systems, such as elevator systems, employing the system and method.

### BACKGROUND

Passenger conveyer systems such as elevator systems generally include a motor, drive shaft, and brake system. In the context of an elevator system, the motor, drive shaft, and brake system control movement of an elevator car within a hoistway. One known type of brake system includes an electromagnetically released brake configured to permit rotation of the drive shaft when an electromagnet is activated and to prevent rotation of the drive shaft, and in turn vertical motion of the elevator car, when the electromagnet is deactivated.

### SUMMARY

A passenger conveyer system according to an exemplary aspect of the present disclosure includes, among other things, an electromagnetic brake and a controller configured to determine a temperature of the electromagnetic brake.

In a further non-limiting embodiment of the foregoing passenger conveyer system, the system includes a current sensor in electronic communication with the electromagnetic brake and configured to provide an output indicative of a current flowing through the electromagnetic brake, and the controller is configured to interpret the output of the current sensor to determine the temperature of the electromagnetic brake.

In a further non-limiting embodiment of any of the foregoing passenger conveyer systems, the controller is configured to interpret the output of the current sensor to determine a resistance of the electromagnetic brake and to determine the temperature of the electromagnetic brake based on the determined resistance.

In a further non-limiting embodiment of any of the foregoing passenger conveyer systems, the system includes a fixed voltage power supply in electronic communication with the electromagnetic brake.

In a further non-limiting embodiment of any of the foregoing passenger conveyer systems, the system includes a motor mechanically connected to the electromagnetic brake, a torque sensor configured to provide an output indicative of a torque of the motor, and the controller is configured to determine the temperature of the electromagnetic brake based on the output of the torque sensor.

In a further non-limiting embodiment of any of the foregoing passenger conveyer systems, the controller is configured to determine the temperature of the electromagnetic brake based on a duty cycle of the passenger conveyer system.

In a further non-limiting embodiment of any of the foregoing passenger conveyer systems, the system includes a thermal switch mounted adjacent the electromagnetic brake, and the controller is configured to determine the temperature of the electromagnetic brake based on an output of the thermal switch.

In a further non-limiting embodiment of any of the foregoing passenger conveyer systems, the thermal switch is configured to open when a temperature of the thermal switch exceeds a threshold.

In a further non-limiting embodiment of any of the foregoing passenger conveyer systems, the thermal switch includes a thermistor.

In a further non-limiting embodiment of any of the foregoing passenger conveyer systems, the controller is configured to determine the temperature of the electromagnetic brake based on a difference between a time current is directed to the electromagnetic brake and a time the electromagnetic brake is disengaged from a drive shaft.

In a further non-limiting embodiment of any of the foregoing passenger conveyer systems, the system includes a first switch between a power supply and the electromagnetic brake, wherein the first switch is configured to selectively open and close in response to instructions from the controller, and further includes a second switch configured to provide an output indicative of whether the electromagnetic brake is engaged or disengaged.

In a further non-limiting embodiment of any of the foregoing passenger conveyer systems, the controller is configured to determine the time current is directed to the electromagnetic brake based on a time the first switch closes, and the controller is configured to determine the time the electromagnetic brake is disengaged from the drive shaft based on the output of the second switch.

In a further non-limiting embodiment of any of the foregoing passenger conveyer systems, the controller is configured to at least temporarily stop operation of the passenger conveyer system when the temperature of the electromagnetic brake falls outside a predetermined range.

In a further non-limiting embodiment of any of the foregoing passenger conveyer systems, the passenger conveyer system is an elevator system.

A method according to an exemplary aspect of the present disclosure includes, among other things, determining a temperature of an electromagnetic brake of a passenger conveyer system.

In a further non-limiting embodiment of the foregoing method, the determining step is based on a current flowing through the electromagnetic brake.

In a further non-limiting embodiment of any of the foregoing methods, the determining step is based on a torque of a motor mechanically connected to the electromagnetic brake.

In a further non-limiting embodiment of any of the foregoing methods, the determining step is based on a duty cycle of the passenger conveyer system.

In a further non-limiting embodiment of any of the foregoing methods, the determining step is based on an output of a thermal switch adjacent the electromagnetic brake.

In a further non-limiting embodiment of any of the foregoing methods, the determining step is based on a difference between a time current is directed to the electromagnetic brake and a time the electromagnetic brake is disengaged from a drive shaft.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Figure 1 illustrates an example passenger conveyer system.
Figure 2 illustrates an example drive system.
Figure 3 is a schematic, cross-sectional view taken along line 3-3 from Figure 2, and illustrates detail of an example electromagnetic brake.
Figure 4 schematically illustrates various components of the example passenger conveyer system.
Figure 5 is an example graphical representation of coil resistance versus temperature.
Figure 6 is an example graphical representation of brake pick time versus temperature.

### DETAILED DESCRIPTION

This disclosure relates to an electromagnetic brake temperature monitoring system and method, and in particular relates to passenger conveyer systems, such as elevator systems, employing the system and method. An example passenger conveyer system includes an electromagnetic brake and a controller configured to determine a temperature of the electromagnetic brake. Among other benefits, which will be appreciated from the below description, this disclosure allows one to readily determine the temperature of the electromagnetic brake, and, in turn, ensure the electromagnetic brake is operating within an optimal temperature range for efficient operation. Further, various aspects of this disclosure permit one to determine the temperature of the electromagnetic brake using existing hardware of the passenger conveyer system, which reduces cost.

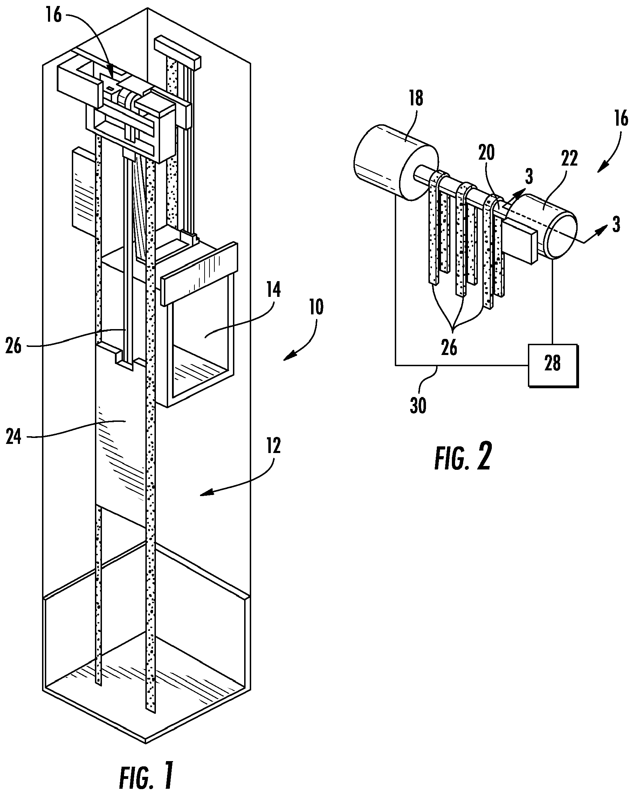

Figure 1 illustrates an example passenger conveyer system 10. In Figure 1, the passenger conveyer system 10 is an elevator system, however this disclosure extends to other passenger conveyer systems such as escalators.

The passenger conveyer system 10 includes a hoistway 12 within which an elevator car 14 travels. Travel of the elevator car 14 is governed, in this example, by a drive system 16 including an electric motor 18 (Figure 2), a drive shaft 20 mechanically connected to the electric motor 18, and an electromagnetically released brake 22 mechanically connected to the electric motor 18 via the drive shaft 20. The electromagnetically released brake 22 will be referred to herein as an electromagnetic brake. In this example, the drive system 16 is mounted near the top of the hoistway 12. It should be understood, however, that the drive system 16 need not be mounted within the hoistway 12 and could be arranged outside the hoistway 12 in a machine room, for example.

The elevator car 14 and a counterweight 24 are suspended from one or more suspension members 26, such as belts or ropes, wrapped around the drive shaft 20. Thus, when the drive shaft 20 rotates, the elevator car 14 moves vertically up or down within the hoistway 12 depending upon the direction of rotation of the drive shaft 20.

A controller 28 monitors and controls drive system 16. The controller 28 is shown schematically in Figure 2. The controller 28 includes electronics, software, or both, to perform the necessary control functions for operating the drive system 16. In one non-limiting embodiment, the controller 28 is an elevator drive controller. Although it is shown as a single device, the controller 28 may include multiple controllers in the form of multiple hardware devices, or multiple software controllers within one or more hardware devices. A controller area network (CAN) 30, illustrated schematically, allows the controller 28 to communicate with various components of the passenger conveyer system 10 by wired and/or wireless electronic connections.

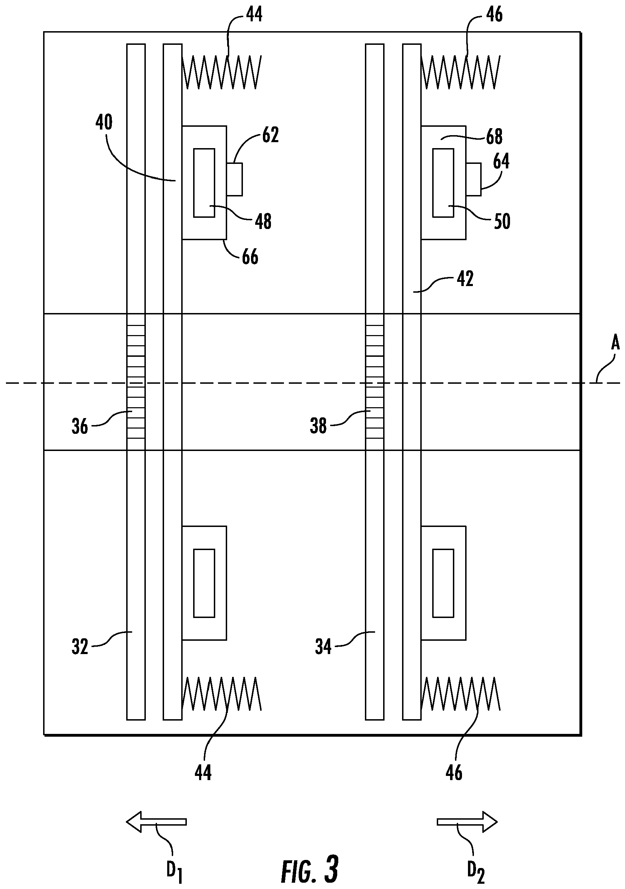

Figure 3 is a cross-sectional view showing additional detail of an example electromagnetic brake 22. In this example, the electromagnetic brake 22 is a clutch brake, but this disclosure is not limited to clutch brakes and extends to other types of electromagnetic brakes such as caliper brakes, drum brakes, etc.

In the example of Figure 3, the electromagnetic brake 22 is oriented about a central axis A and includes first and second discs 32, 34 including splines 36, 38 configured to interface with the drive shaft 20 (not shown in Figure 3). The discs 32, 34, and in turn the drive shaft 20, are configured to selectively rotate about the central axis A depending on a position of respective first and second plates 40, 42. In this example, the first and second plates 40, 42 are biased in a first direction D₁ by respective sets of first springs 44 and second springs 46 into engagement, specifically direct contact, with the first and second discs 32, 34. The first direction D₁ is parallel to the central axis A and extends in the left-hand direction relative to Figure 3. When the first and second plates 40, 42 directly contact the respective first and second discs 32, 34 under the force of the first and second springs 44, 46, the first and second plates 40, 42 prevent the first and second discs 32, 34 from rotating about the central axis A. In this condition, the electromagnetic brake 22 is engaged and the drive shaft 20 is prevented from rotating, and, thus, the elevator car 14 is prevented from moving within the hoistway 12.

In order to disengage the electromagnetic brake 22 and permit rotation of the drive shaft 20, the controller 28 issues one or more instructions to activate one or more electromagnets of the electromagnetic brake 22. In this disclosure, the electromagnetic brake 22 includes two electromagnets, each including a respective coil 48, 50 of wire. The coils 48, 50 may extend circumferentially about the central axis A. In response to instructions from the controller 28, current flows through the coils 48, 50, to produce magnetic fields sufficient to attract the first and second plates 40, 42, which themselves may be made of a material that is attracted to the magnetic fields, such as metal. The magnetic fields produced by the coils 48, 50 overcome the force of the first and second springs 44, 46 and causes the first and second plates 40, 42 to move in a second direction D₂ opposite the first direction D₁ such that the first and second plates 40, 42 no longer directly contact the first and second discs 32, 34. As such, the first and second discs 32, 34 are free to rotate about the central axis A. The drive shaft 20 is, in turn, also free to rotate.

While Figure 3 illustrates one example electromagnetic brake 22, this disclosure is not limited to the details of Figure 3. In particular, while the electromagnetic brake 22 includes two sets of discs, plates, coils, springs, etc., this disclosure extends to electromagnetic brakes with one or more sets of discs, plates, coils, and springs.

In this disclosure, to ensure efficient operation of the drive system 16, the controller 28 is configured to determine the temperature of the electromagnetic brake 22. The term "detect" is used herein to mean that the controller 28 is configured to receive one or more inputs and use those inputs to ascertain the temperature of the electromagnetic brake 22 as a result of performing a calculation, running an algorithm, using a lookup table, etc.

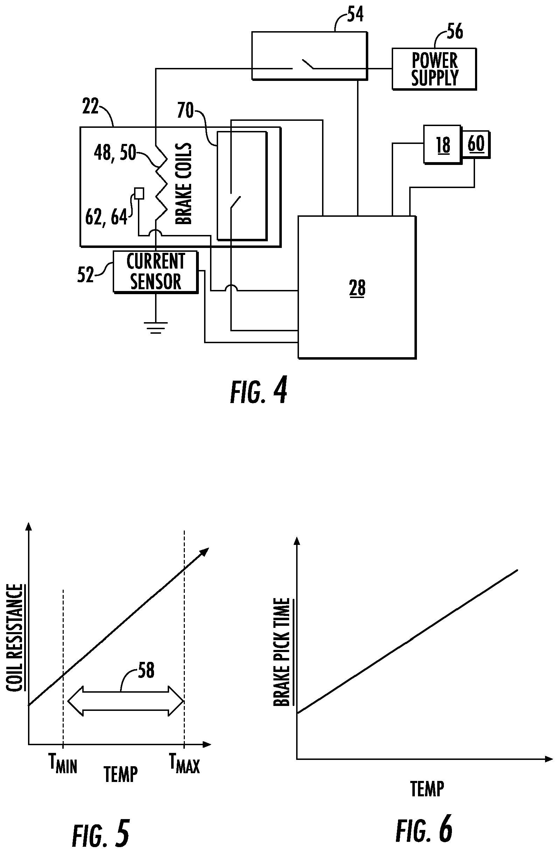

Figure 4 schematically illustrates the controller 28 relative to various components of the passenger conveyer system 12. The controller 28 is configured to determine a temperature of the electromagnetic brake 22 based on inputs from one or more of these components, as will now be described.

In one aspect of this disclosure, the controller 28 is configured to determine the temperature of the electromagnetic brake 22 based on an output of a current sensor 52. In particular, in Figure 4, a current sensor 52 is configured to provide an output indicative of a current flowing through the coils 48, 50 of the electromagnetic brake 22.

In particular, when a first switch 54, which may be a relay, is closed in response to an instruction from the controller 28, a power supply 56, such as a fixed voltage power supply like a battery, is electronically connected to the coils 48, 50. The controller 28 may use an algorithm based on Ohm's law to relate the voltage of the power supply 56, which may be 24 or 48 Volts, as examples, to a resistance of the coils 48, 50. The controller 28 then uses an algorithm, lookup table, or the like, to determine a temperature of the electromagnetic brake 22 based on the resistance of the coils 48, 50.

Figure 5 is representative of an example correlation between the resistance of the coils 48, 50 (Y-axis) and the temperature of the electromagnetic brake 22 (X-axis). A predetermined operating range 58 may be defined by the temperature ratings of the coils 48, 50, for example. The predetermined operating range 58 is defined and stored in the controller 28, and extends between Tmin and Tₘₐₓ, which are predefined minimum and maximum temperature thresholds. If the controller 28 determines that the temperature of the electromagnetic brake 22 is outside the predetermined operating range 58, then the controller 28 may issue instructions to at least temporarily stop operation of the passenger conveyer system 10 or take some other corrective action, such as heating or cooling the electromagnetic brake 22.

With reference back to Figure 4, in another aspect of this disclosure, the controller 28 is configured to determine the temperature of the electromagnetic brake 22 based on an output of a torque sensor 60 configured to provide an output indicative of a torque of the electric motor 18. In one example, the torque sensor 60 is provided by the motor 18 and/or the controller 28. In that example, torque can be determined by monitoring motor current feedback. In another example, the torque sensor 60 is a separate, dedicated sensor. The controller 28 may be able to identify conditions where the electromagnetic brake 22 is applying excess friction while the electric motor 18 is running, for example. In those conditions, the controller 28 is configured to determine that the torque of the electric motor 18 is exceeding an expected torque level, and the controller 28 is further configured, using an algorithm or lookup table for example, to determine the temperature of the electromagnetic brake 22 based on the excess torque.

In a further aspect of this disclosure, the controller 28 is configured to determine the temperature of the electromagnetic brake 22 based on a duty cycle of the passenger conveyer system 10. In particular, the controller 28 is configured to monitor how often the passenger conveyer system 10 is active during a particular period of time. When the passenger conveyer system 10 is active, the elevator car 14 is moving and the electromagnetic brake 22 is disengaged. As such, current is flowing though the coils 48, 50. The duty cycle may be determined by ascertaining the total amount of time the first switch 54 is closed during a time period.

In a further aspect of this disclosure, one or more thermal switches 62, 64 are in electronic communication with the controller 28. The thermal switches 62, 64, as shown in Figure 3, are mounted adjacent respective coils 48, 50. In a particular example, the thermal switches 62, 64 may be mounted adjacent or embedded within a coil case 66, 68 surrounding the coils 48, 50. The thermal switches 62, 64 are configured to open when they reach a predetermined temperature and close again when they fall back below the predetermined temperature. When the thermal switches 62, 64 open, the controller 28 is configured to determine that the electromagnetic brake 22 has at least met, if not exceeded, that predetermined temperature. In this sense, the output of the thermal switches 62, 64 may be considered a binary output indicating whether the temperature of the thermal switches 62, 64 has met the predetermined temperature or not. In another example, the thermal switches are provided by thermistors, such as positive temperature coefficient (PTC) thermistors, and are configured to vary in resistance in proportion to temperature. In that example, the output of the thermal switches 62, 64 is variable and provides a more precise indication of temperature. A benefit of using thermal switches 62, 64 is that normal operation of the passenger conveyer system 10 may resume when the electromagnetic brake 22 returns to an acceptable operating range.

In yet another aspect of this disclosure, the controller 28 is configured to determine the temperature of the electromagnetic brake 22 based on a difference between a time current is directed to the electromagnetic brake 22 and a time the electromagnetic brake 22 is disengaged from a drive shaft 20. This time difference may be referred to as "pick time" or "brake pick time."

In order to determine pick time, the controller 28 monitors outputs of the first switch 54 and a second switch 70, which may be a relay. In a particular example, the second switch 70 is configured to close when the first and second plates 40, 42 have come out of direct contact with the discs 32, 34. In other words, the second switch 70 is configured to close when the electromagnetic brake 22 is disengaged and open when the electromagnetic brake 22 is engaged. Thus, in this example, the controller 28 determines pick time by determining the time between closure of the first switch 54 and closure of the second switch 70. The controller 28 may relate pick time to temperature of the electromagnetic brake 22 using an algorithm or lookup table, for example. As shown generally in Figure 6, brake pick time (Y-axis) is proportional temperature (X-axis) of the electromagnetic brake 22.

It should be understood that the second switch 70 could be a plurality of switches connected in series, with each switch corresponding to a respective one of the plates 40, 42.

In another aspect of the disclosure, the time between a current interruption as indicated by opening the first switch 54 and a time the electromagnetic brake 22 engages as indicated by opening of switch 70 is monitored. This time may be referred to as "drop time." A drop time above a predetermined threshold may indicate that a temperature of the electromagnetic brake 22 is below Tₘᵢₙ, for example.

While a number of aspects of this disclosure have been described above, it should be understood that this disclosure extends to passenger conveyer systems including one or all of the disclosed embodiments. For instance, the controller 28 could determine temperature of the electromagnetic brake 22 based on pick time and, in parallel, based on the output of the current sensor 52. The results of the multiple temperature determinations can be averaged in an example.

It should be understood that terms such as "generally," "substantially," and "about" are not intended to be boundaryless terms, and should be interpreted consistent with the way one skilled in the art would interpret those terms.

Although the different examples have the specific components shown in the illustrations, embodiments of this disclosure are not limited to those particular combinations. It is possible to use some of the components or features from one of the examples in combination with features or components from another one of the examples. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. A passenger conveyer system, comprising:
an electromagnetic brake; and
a controller configured to determine a temperature of the electromagnetic brake.

2. The passenger conveyer system as recited in claim 1, further comprising:
a current sensor in electronic communication with the electromagnetic brake and configured to provide an output indicative of a current flowing through the electromagnetic brake; and
wherein the controller is configured to interpret the output of the current sensor to determine the temperature of the electromagnetic brake.

3. The passenger conveyer system as recited in claim 2, wherein the controller is configured to interpret the output of the current sensor to determine a resistance of the electromagnetic brake and to determine the temperature of the electromagnetic brake based on the determined resistance and wherein the system optionally further comprises:
a fixed voltage power supply in electronic communication with the electromagnetic brake.

4. The passenger conveyer system as recited in any preceding claim, further comprising:
a motor mechanically connected to the electromagnetic brake;
a torque sensor configured to provide an output indicative of a torque of the motor; and
wherein the controller is configured to determine the temperature of the electromagnetic brake based on the output of the torque sensor.

5. The passenger conveyer system as recited in any preceding claim, wherein the controller is configured to determine the temperature of the electromagnetic brake based on a duty cycle of the passenger conveyer system.

6. The passenger conveyer system as recited in any preceding claim, further comprising:
a thermal switch mounted adjacent the electromagnetic brake; and
wherein the controller is configured to determine the temperature of the electromagnetic brake based on an output of the thermal switch.

7. The passenger conveyer system as recited in claim 6, wherein the thermal switch is configured to open when a temperature of the thermal switch exceeds a threshold.

8. The passenger conveyer system as recited in claim 6 or 7, wherein the thermal switch includes a thermistor.

9. The passenger conveyer system as recited in any preceding claim, wherein the controller is configured to determine the temperature of the electromagnetic brake based on a difference between a time current is directed to the electromagnetic brake and a time the electromagnetic brake is disengaged from a drive shaft.

10. The passenger conveyer system as recited in claim 9, further comprising:
a first switch between a power supply and the electromagnetic brake, wherein the first switch is configured to selectively open and close in response to instructions from the controller; and
a second switch configured to provide an output indicative of whether the electromagnetic brake is engaged or disengaged.

11. The passenger conveyer as recited in claim 10, wherein:
the controller is configured to determine the time current is directed to the electromagnetic brake based on a time the first switch closes, and
the controller is configured to determine the time the electromagnetic brake is disengaged from the drive shaft based on the output of the second switch.

12. The passenger conveyer system as recited in any preceding claim, wherein the controller is configured to at least temporarily stop operation of the passenger conveyer system when the temperature of the electromagnetic brake falls outside a predetermined range.

13. The passenger conveyer system as recited in any preceding claim, wherein the passenger conveyer system is an elevator system.

14. A method, comprising:
determining a temperature of an electromagnetic brake of a passenger conveyer system.

15. The method as recited in claim 14, wherein the determining step is based on a current flowing through the electromagnetic brake; and/or.
wherein the determining step is based on a torque of a motor mechanically connected to the electromagnetic brake; and/or
wherein the determining step is based on a duty cycle of the passenger conveyer system; and/or
wherein the determining step is based on an output of a thermal switch adjacent the electromagnetic brake; and/or
wherein the determining step is based on a difference between a time current is directed to the electromagnetic brake and a time the electromagnetic brake is disengaged from a drive shaft.
